Europäisches Patentamt

**European Patent Office**

**Office européen des brevets**

(11) Veröffentlichungsnummer: **0 084 664**
**B1**

(12) **EUROPÄISCHE PATENTSCHRIFT**

(45) Veröffentlichungstag der Patentschrift:
16.03.88

(21) Anmeldenummer: **82111919.5**

(22) Anmeldetag: **22.12.82**

(51) Int. Cl.⁴: **B 60 T 8/00**

(54) Antiblockiersystem.

(30) Priorität: 22.01.82 DE 3201929

(43) Veröffentlichungstag der Anmeldung:
03.08.83 Patentblatt 83/31

(45) Bekanntmachung des Hinweises auf die Patenterteilung:
16.03.88 Patentblatt 88/11

(84) Benannte Vertragsstaaten:
DE FR GB IT SE

(56) Entgegenhaltungen:
DE-A-2 419 761
DE-A-2 555 005
DE-A-3 042 876
GB-A-2 064 693
US-A-3 930 688

PROCEEDINGS OF 30TH ANNUAL CONFERENCE
OF THE IEEE VEHICULAR TECHNOLOGY SOCIETY,
INTERNATIONAL CONFERENCE ON
TRANSPORTATION ELECTRONICS, 15.-17.
September 1980, Seiten 1-7, DE; Bohn Printing
Company, Michigan, US; Dr. H. SCHOLL: "Status
of automotive electronics in Germany"

(73) Patentinhaber: ROBERT BOSCH GMBH, Postfach
50, D-7000 Stuttgart 1 (DE)

(72) Erfinder: Braschel, Volker, Goethestrasse 1, D-7100
Heilbronn (DE)

LIBER, STOCKHOLM 1988

EP 0 084 664 B1

## Beschreibung

Die Erfindung geht aus von einem Antiblockiersystem nach dem Obergriff des unabhängigen Patentanspruchs 1 (DE-A-2 555 005).

Es ist bekannt, Kratfahrzeuge mit Antiblockiersystemen zu versehen, die in Abhängigkeit von Fahrzustandsgrößen den Bremsdruck absenken, konstanthalten und erhöhen können. Dabei wird üblicherweise nach einer Bremsdruckerhöhung und sich einstellender vorbestimmter Schlupferhöhung eines Rades der Bremsdruck zunächst konstant gehalten und dann abgesenkt, wenn eine bestimmte Verzögerungsschwelle eines Rades überschritten wurde. Die Druckabsenkung wird dann solange fortgesetzt, bis eine bestimmt, Verzögerungsschwelle wieder unterschritten wurde, d.h., bis das sensierte Rad zur Wiederbeschleunigung neigt. Dabei treten aufgrund der Systemträgheit und der zur Störunterdrückung erforderlichen Filtermaßnahmen gelegentlich Schwierigkeiten auf, den genauen Zeitpunkt zu bestimmen, an dem die Absenkung des Bremsdruckes beendet werden soll. Wegen der genannten Verzögerungen und Totzeiten kann es dann dazu kommen, daß der Bremsdruckabbau zu spät beendet wird.

Um diesen Nachteil zu vermeiden, ist es bekannt, den Druck nur für eine fest vorgegebene Zeit abzusenken und die Absenkung dann zu unterbrechen. Es ist weiter bekannt, eine Druckabsenkung nur dann wirksam werden zu lassen, wenn eine weitere, nämlich höhere Verzögerungsschwelle überschritten wird.

Schließlich ist es aus der DE-A-2 555 005 bekannt, die Zeitdauer der Druckabsenkung mit einem retriggerbaren Zeitglied zu steuern, wobei die abnehmende Radgeschwindigkeit stufenweise erfaßt und bei Unterschreitung je eines dieser vorgegebenen Geschwindigkeitsintervalle das Zeitglied angesteuert wird, so daß sich insgesamt eine Zeitdauer der Druckabsenkung ergibt, die von der Anzahl der unterschrittenen Geschwindigkeitsintervalle abhängt.

Bei dieser bekannten Einrichtung ist jedoch das adaptive Regelverhalten nicht optimal, da durch Verlängerung der Druckabsenkphase eine insgesamt zu lange Dauer des Regelspiels auftreten kann. Weiterhin ist es notwendig, das Zeitglied mit einer ausreichend großen Zeitkonstante zu dimensionieren, damit auch beim einmaligen Anstoßen des Zeitgliedes eine ausreichende Druckabbauzeit zur Verfügung steht; dann kann sich jedoch als nachteilig auswirken, daß nach Unterschreiten des letzten Geschwindigkeitsintervalls immer noch eine restliche Druckabbauzeit eingestellt wird, die der Verzögerungszeit des Zeitgliedes entspricht.

## Vorteile der Erfindung

Das erfindungsgemäße Antiblockiersystem mit den Merkmalen des unabhängigen Anspruches 1 hat demgegenüber einmal den Vorteil, daß nicht nur die Zeitdauer der Druckabsenkung, sondern ebenfalls - und zwar gegensinnig - die Dauer der anschließenden Druckkonstanshaltung abhängig von der Änderung der Radgeschwindigkeit eingestellt wird, so daß das adaptive Verhalten der Regelung erheblich verbessert wird, da einer Verlängerung der Druckabbauzeit eine Verkürzung der Druckkonstanthaltungszeit gegenübersteht. Zum anderen ist es beim erfindungsgemäßen Antiblockiersystem möglich, die jeweils der Druckabbauzeit hinzuzufügenden Zeitintervalle durch Vorgabe einer anfänglichen Minimaldruckabbauzeit gering zu dimensionieren, so daß eine sehr feinfühlige Regelung möglich ist, die bei Unterschreiten des letzten Geschwindigkeitsintervalls auch sehr schnell mit Beendigung der Druckabbauphase reagiert.

Weitere Vorteile ergeben sich aus der Beschreibung der beigefügten Zeichnungen.

## Zeichnungen

Die Erfindung wird anhand der Zeichnungen und der nachfolgenden Beschreibung näher erläutert. Es zeigen Eiguren 1 und 2 Verläufe der Radgeschwindigkeit $v_R$ und des Bremsdruckes p in Abhängigkeit von der Zeit t während eines Regelspiels zweier Ausführungsformen erfindungsgemäßer Antiblockiersysteme.

## Beschreibung der Ausführungsbeispiele

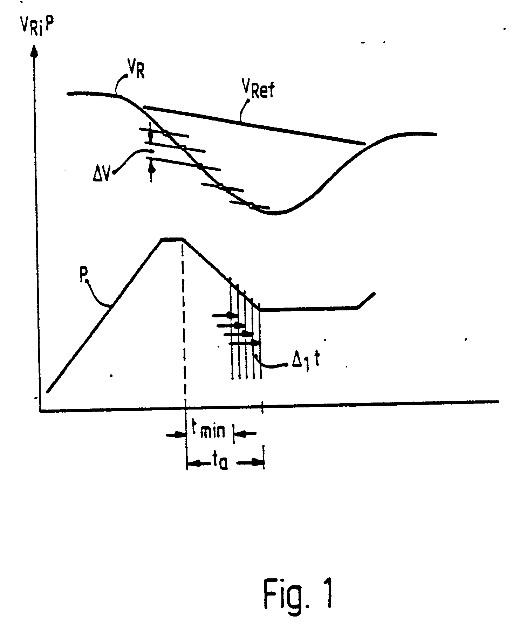

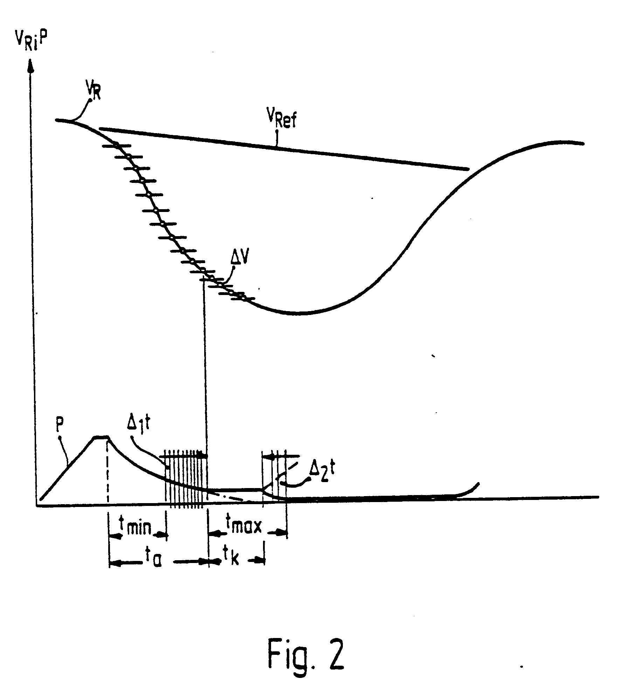

In den Figuren 1 und 2 sind die Radgeschwindigkeit $v_R$ und der Bremsdruck p über der Zeit während eines Regelspiels dargestellt. Bei Einleitung des Bremsvorganges nimmt der Bremsdurck p zunächst zu und die Radgeschwindigkeit $v_R$ entsprechend ab. In bekannter Weise wird nun dann, wenn die Radgeschwindigkeit $v_R$ infolge eintretender Blockierneigung stark abnimmt, eine Abweichung zwischen $v_R$ und der Referenzgeschwindigkeit $v_{ref}$, entstehen und bei Auftreten einer vorgegebenen Differenz zwischen $v_{ref}$ und $v_R$ der Druckabbau eingeleitet. Die Radgeschwindigkeit $v_R$ wird im nachfolgenden nun daraufhin überwacht, ob bestimmte vorgegebene Geschwindigkeitsintervalle $\Delta v$ von beispielsweise 0,25 km/h überschritten werden. Die Zeitdauer der Druckabsenkung wird nun einmal durch eine vorgegebene Minimalzeit $t_{min}$, bestimmt, wie dies aus den Figuren ersichtlich ist. Gleichzeitig werden die überschrittenen Geschwindigkeitsintervalle $\Delta v$ gezählt, im

dargestellten Beispiel gemäß Figur 1 beträgt die Anzahl vier. Im erfindungsgemäßen Antiblockiersystem sind nun erste Zeitintervalle $\Delta_{1t}$ vorgegeben, um die die Minimalzeit $t_{min}$ verlängerbar ist. Im dargestellten Beispiel wurden vier Geschwindigkeitsintervalle $\Delta v$ überschritten, daher wurde die Minimalzeit $t_{min}$ um vier erste Zeitintervalle $\Delta_{1t}$ verlängert, so daß sich insgesamt eine Druckabbauzeit von $t_a$ ergibt.

Nachdem das letzte der ersten Zeitintervalle $\Delta_{1t}$ verstrichen ist, schließt sich erfindungsgemäß die Druckkonstanthaltung an, deren Dauer aus einer vorgegebenen Maximalzeit $t_{max}$ abzüglich einer Anzahl von zweiten Zeitintervallen $\Delta_{2t}$ bestimmt wird. Die zweiten Zeitintervalle $\Delta_{2t}$ sind ebenfalls im erfindungsgemäßen Antiblockiersystem vorgegeben, ihre Zeitdauer braucht jedoch nicht der der ersten Zeitintervalle $\Delta_{1t}$ zu entsprechen. Im dargestellten Beispiel gemäß Figur 2 wurde die Maximalzeit $t_{max}$ entsprechend um drei zweite Zeitintervalle $\Delta_{2t}$ vermindert, entsprechend der Anzahl der während der Druckkonstanthaltung unterschrittenen Geschwindigkeitsintervalle. Damit ergibt sich eine Zeitdauer $t_k$ der Druckkonstanthaltung, die sich aus der Maximalzeit $t_{max}$ abzüglich drei zweiter Zeitintervalle $\Delta_{2t}$ ergibt.

Dabei versteht sich von selbst, daß die Anzahl der ersten bzw. zweiten Zeitintervalle $\Delta_{1t}$, $\Delta_{2t}$ nicht gleich der Anzahl der jeweils unterschrittenen Geschwindigkeitsintervalle $\Delta v$ zu sein braucht, es ist selbstverständlich auch möglich, eine proportionale oder sonstwie geartete nichtlineare Abhängigkeit der Anzahl der Zeitintervalle von der Anzahl der Geschwindigkeitsintervalle einzustellen.

In einem praktischen Ausführungsbeispiel beträgt beispielsweise das Geschwindigkeitsintervall $\Delta v = 0{,}25$ km/h und die Zeitintervalle $\Delta_{1t}$, $\Delta_{2t}$ betragen jeweils 0,5 ms.

Um bei besonders niedrigen Reibbeiwerten der Fahrbahn Fehlsteuerungen zu vermeiden, die dadurch auftreten können, daß am Ende der Druckabsenkung (nach Ablauf von $t_a$) noch ein zu hoher Bremsdruck p ansteht, wird in weiterer Ausgestaltung der Erfindung eine hohe Schlupfschwelle $\lambda_2$ a definiert und es wird überwacht, ob am Ende der Druckabsenkung diese hohe Schlupfschwelle noch überschritten wird. Ist dies der Fall, wird die an sich einzustellende Konstanthaltungsphase durch eine weitere Druckabsenkung übersteuert, wie dies in Figur 2 strichpunktiert eingetragen ist.

Wie aus Figur 2 weiter ersichtlich ist, erfolgt der Druckabbau während der Druckabsenkung umso langsamer, je kleiner der Druck im Radbremszylinder ist. Da der am Ende der Druckabsenkung anstehende Bremsdruck zur Wiederbeschleunigung des Rades ausreichen muß, kann hierdurch der Fall eintreten, daß der während der Konstanthaltung eingestellte Druck noch nicht zur Wiederbeschleunigung des Rades ausreicht, so daß es erforderlich ist, am Ende der Druckkonstanthaltung einen weiteren Druckabbau vorzusehen, wie dies in Figur 2 durchgezogen eingetragen ist, anstatt den Druck wie sonst üblich, weiter konstant zu halten, wie dies in Figur 2 gestrichelt dargestellt ist. In weiterer Ausgestaltung der Erfindung wird daher nach Ablauf der Zeit $t_k$ überprüft, ob die Radverzögerungsschwelle noch überschritten ist, was darauf hindeutet, daß ein niedriger Reibbeiwert der Fahrbahn vorliegt und das Rad nicht ausreichend wiederbeschleunigt. Es versteht sich daher, daß statt des Überschreitens einer Radverzögerungsschwelle auch das Nichterreichen einer Wiederbeschleunigungsschwelle herangezogen werden kann. Wird auf diese Weise ein niedriger Reibbeiwert erkannt, wird der Bremsdruck solange weiter abgesenkt, bis wieder ein Wiederbeschleunigungssignal des überwachten Rades ansteht.

Damit ist insgesamt die Zeit für die Druckabsenkung bzw. Druckkonstanthaltung abhängig von der Radverzögerung. Bei großen Radverzögerungen, bei denen möglichst frühzeitig viel Druck abgebaut werden muß, ist die Druckabbauzeit $t_a$ groß und die Druckkonstanthaltezeit $t_k$ kurz. Gegenüber dem aus dem Stand der Technik bekannten Verfahren zur Einstellung der Druckabbauzeit, bei denen eine zweite Verzögerungsschwelle überschritten werden muß, hat diese Lösung ersichtlich den Vorteil, daß sich während des ersten Druckabbaus ein integrierendes Verhalten bezüglich der Radverzögerung für die Abbauzeit ergibt. Dadurch bleibt auch für kurzzeitige Verringerungen der Radverzögerung die Druckabbauansteuerung vorhanden.

## Patentansprüche

1. Antiblockiersystem mit Mitteln zum Absenken und anschließenden Konstanthalten des Bremsdruckes bei Erreichen vorbestimmter Fahrzustände, wobei die Dauer der Druckabsenkung bzw. Druckkonstanthaltung einstellbar ist und weitere Mittel vorgesehen sind, die die Abnahme der Radgeschwindigkeit intervallweise erfassen und in Abhängigkeit von der Anzahl der unterschrittenen Geschwindigkeitsintervalle ($\Delta v$) die Dauer der Druckabsenkung einstellen, dadurch gekennzeichnet, daß für die Dauer der Druckabsenkung ($t_a$) eine vorbestimmte Minimalzeit ($t_{min}$) vorgegeben ist, die um eine der Anzahl der während der Druckabsenkung unterschrittenen Geschwindigkeitsintervalle ($\Delta v$) entsprechende Anzahl von ersten Zeitintervallen ($\Delta_{1t}$) verlängert wird, und daß für die Dauer der Druckkonstanthaltung ($t_k$) eine vorbestimmte Maximalzeit ($t_{max}$) vorgegeben ist, die um eine der Anzahl der während der Druckkonstanthaltung unterschrittenen Geshwindigkeitsintervalle ($\Delta v$) entsprechende Anzahl von zweiten Zeitintervallen ($\Delta_{2t}$) verkürzt

wird.

2. Antiblockiersystem nach Anspruch 1, mit Mitteln zum Erfassen des Schlupfes ($\lambda$) der Räder und zum Feststellen des Überschreitens einer hohen Schlupfschwelle ($\lambda_2$), dadurch gekennzeichnet, daß nach Ablauf der Dauer ($t_a$) der Druckabsenkung die Druckkonstanthaltung dann von einer weiteren Druckabsenkung übersteuert wird, wenn zu diesem Zeitpunkt die hohe Schlupfschwelle ($\lambda_2$) noch überschritten ist.

3. Antiblockiersystem nach Anspruch 1 oder 2, mit Mitteln zum Erfassen des Schlupfes ($\lambda$) der Räder, zum Feststellen des Überschreitens einer niedrigen Schlupfschwelle ($\lambda_1$), einer hohen Schlupfschwelle ($\lambda_2$) und einer Radverzögerungsschwelle, dadurch gekennzeichnet, daß nach Ablauf der Dauer ($t_k$) der Druckkonstanthaltung eine weitere Druckabsenkung dann eingeleitet wird, wenn die niedrige Schlupfschwelle ($\lambda_1$) oder die Radverzögerungsschwelle noch überschritten ist.

4. Antiblockiersystem nach Anspruch 2 oder 3, mit Mitteln zum Festellen des Erreichens einer Wiederbeschleunigungsschwelle, dadurch gekennzeichnet, daß die weitere Druckabsenkung dann beendet wird, wenn die Wiederbeschleunigungsschwelle überschritten ist.

**Claims**

1. Antilock system having means for reducing and for subsequently maintaining constant the breaking pressure on attainment of predetermined travel conditions, the duration of the pressure reduction or of the maintenance of the pressure at a constant level being adjustable, and further means being provided, which record the reduction of the wheel speed at intervals and adjust the duration of the pressure reduction as a function of the number of speed intervals ($\Delta v$) which are fallen below, characterized in that for the duration of the pressure reduction $t_a$ a predetermined minimum time $t_{min}$ is prescribed, which is extended by a number of first time intervals ($\Delta_{1t}$) which corresponds to the number of speed intervals ($\Delta v$) which are fallen below during the pressure reduction, and in that for the duration of the maintenance of the pressure at a constant level ($t_k$) a predetermined maximum ($t_{max}$) is prescribed, which is reduced by a number of second time intervals ($\Delta_{2t}$) which corresponds to the number of speed intervals ($\Delta v$) which are fallen below during the maintenance of the pressure at a constant level.

2. Antilock system according to Claim 1, having means for detecting the slip ($\lambda$) of the wheels and for establishing the exceeding of a high slip threshold ($\lambda_2$), characterized in that, after elapse of the duration ($t_a$) of the pressure reduction, the maintenance of the pressure at a constant level is then overridden by a further pressure reduction if the high slip threshold ($\lambda_2$) is still exceeded at this point in time.

3. Antilock system according to Claim 1 or 2, having means for recording the slip ($\lambda$) of the wheels, and for establishing the exceeding of a low slip threshold ($\lambda_1$), a high slip threshold ($\lambda_2$) and a wheel retardation threshold, characterized in that, after elapse of the duration ($t_k$) of the maintenance of pressure at a constant level, a further pressure reduction is then initiated if the low slip threshold ($\lambda_1$) or the wheel retardation threshold is still exceeded.

4. Antilock system according to Claim 2 or 3, having means for establishing the attainment of a reacceleration threshold, characterized in that the further pressure reduction is terminated when the reacceleration threshold is exceeded.

**Revendications**

1. Système antiblocage comportant des moyens pour abaisser, puis maintenir constante, la pression de freinage lorsque l'on atteint des états prédéterminés de marche, étant précisé que l'on peut régler la durée pendant laquelle on abaisse la pression et pendant laquelle on la maintient constante et qu'il est prévu d'autres moyens qui saisissent, par intervalles de vitesse, la diminution de la vitesse de la roue et qui déterminent la durée pendant laquelle on abaisse la pression en fonction du nombre des intervalles de vitesse ($\Delta_v$) en dessous desquels on est passé, caractérisé en ce que, pour la durée ($t_a$) pendant laquelle la pression est abaissée, il est prévu une durée minimale prédéterminée ($t_{min}$) qui se prolonge d'un nombre de premiers intervalles de temps ($\Delta_{1t}$) qui correspond au nombre des intervalles de vitesse ($\Delta_v$) en dessous desquels on est passé pendant que la pression était abaissée; et en ce que, pour la durée pendant laquelle la pression est maintenue constante ($t_k$), il est prévu une durée maximale prédéterminée ($t_{max}$) qui se raccourcit d'un nombre de seconds intervalles de temps ($\Delta_{2t}$) qui correspond au nombre des intervalles de vitesse ($\Delta_v$) en dessous desquels on est passé pendant que la pression était maintenue constante.

2. Système antiblocage selon la revendication 1, comportant des moyens pour saisir le patinage ($\lambda$) des roues et pour déterminer si l'on passe au-dessus d'une valeur haute de seuil de patinage ($\lambda_2$), caractérisé en ce qu'après écoulement de la durée ($t_a$) pendant laquelle la pression est abaissée, un autre abaissement de la pression est commandé, avec priorité sur la commande de constance de la pression, si, à cet instant, on se trouve encore au-dessus de la valeur haute de seuil de patinage ($\lambda_2$).

3. Système antiblocage selon la revendication 1 ou 2, comportant des moyens pour saisir le patinage ($\lambda$) des roues, pour déterminer si l'on dépasse une valeur basse de seuil de patinage ($\lambda_1$), une valeur haute de seuil de patinage ($\lambda_2$) et

une valeur de seuil de décélération de la roue, caractérisé en ce qu'après écoulement de la durée ($t_k$) pendant laquelle la pression est maintenue constante, il se produit un nouvel abaissement de la pression si l'on n'a pas encore dépassé la valeur basse de seuil de patinage ($\lambda_1$) ou la valeur de seuil de décélération de la roue.

4. Système antiblocage selon la revendication 2 ou la revendication 3, comportant des moyens pour déterminer si l'on atteint une valeur de seuil de réaccélération, caractérisé en ce que le nouvel abaissement de la pression se termine lorsque l'on a dépassé la valeur de seuil de réaccélération.

Fig. 1

Fig. 2